(19) Europäisches Patentamt
European Patent Office
Office européen des brevets

(11) **EP 4 357 955 A1**

(12) **EUROPEAN PATENT APPLICATION**
published in accordance with Art. 153(4) EPC

(43) Date of publication:
**24.04.2024 Bulletin 2024/17**

(51) International Patent Classification (IPC):
**G06F 21/60** (2013.01)     **G06F 21/16** (2013.01)

(21) Application number: **22836594.6**

(52) Cooperative Patent Classification (CPC):
**G06F 21/16; G06F 21/60; H04L 9/06**

(22) Date of filing: **10.05.2022**

(86) International application number:
**PCT/CN2022/091963**

(87) International publication number:
**WO 2023/279837 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021 CN 202110780862**

(71) Applicant: **Huawei Cloud Computing
Technologies Co., Ltd.
Guizhou 550025 (CN)**

(72) Inventors:
• **WANG, Xinyu**
  **Guizhou 550025 (CN)**
• **ZHUO, Zhongliu**
  **Guizhou 550025 (CN)**
• **ZHU, Tao**
  **Guizhou 550025 (CN)**
• **LI, Quandong**
  **Guizhou 550025 (CN)**
• **WANG, Zhonggang**
  **Guizhou 550025 (CN)**
• **QU, Fei**
  **Guizhou 550025 (CN)**

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR ADDING WATERMARK IN DATA, AND RELATED DEVICE**

(57) This application provides a method for adding a watermark to data. Specifically, a plurality of pieces of to-be-processed data are obtained, and a plurality of groups corresponding to the plurality of pieces of to-be-processed data are further obtained. The plurality of groups include a target group. Then, watermarks are added to to-be-processed data in the target group by using the target group as a granularity. Because watermarks are added to the plurality of pieces of to-be-processed data by using the group as the granularity, although the to-be-processed data in the group is modified due to watermark adding, the to-be-processed data changes within a range of a small amount of to-be-processed data included in the target group, and does not change within a range of all the to-be-processed data, thereby alleviating a problem that the data is severely distorted after watermark adding. When to-be-processed data with similar semantics is placed in a same group, semantics of the to-be-processed data in the target group has a relatively small change after watermark adding. In addition, this application further provides an apparatus for adding a watermark to data and a related device.

FIG. 4

**Description**

This application claims priority to Chinese Patent Application No. 202110780862.0, filed with the China National Intellectual Property Administration on July 9, 2021 and entitled "METHOD AND APPARATUS FOR ADDING WATERMARK TO DATA, AND RELATED DEVICE", which is incorporated herein by reference in its entirety.

**TECHNICAL FIELD**

This application relates to the field of database technologies, and in particular, to a method and an apparatus for adding a watermark to data, and a related device.

**BACKGROUND**

Digital information technologies such as cloud computing, an internet of things, and artificial intelligence have accumulated a large amount of data in a developing process. Usually, the data can be shared with an internal or external user of an organization to mine potential value of the data, for example, perform intelligent product recommendation or quality assessment based on the data. However, in an actual application scenario, the data may be leaked to an unauthorized user due to, for example, improper protection or a leaker, and consequently an immeasurable loss may be caused to assets and reputation of the organization.

Currently, before providing data, a data owner may add watermark information to the data in an invisible embedding manner, so that source tracing and accountability are performed based on the watermark information when the data is leaked, and a potential user of the leaked data may be deterred to a specific degree, thereby reducing a data leakage probability.

However, when the watermark information is added to the data, the original data is modified. As a result, the data may be severely distorted, making data with the watermark information unavailable.

**SUMMARY**

This application provides a method for adding a watermark to data, to alleviate a problem that data is distorted after watermark adding while maintaining a capability of performing source tracing by using watermark information. In addition, this application further provides an apparatus for adding a watermark to data, a device, a computer-readable storage medium, and a computer program product.

According to a first aspect, this application provides a method for adding a watermark to data. During specific implementation, a plurality of pieces of to-be-processed data may be obtained, and a plurality of groups corresponding to the plurality of pieces of to-be-processed data may be further obtained. The plurality of groups include a target group, and the target group may be any one of the plurality of groups, or may be some of the plurality of groups. Then, watermarks are added to to-be-processed data in the target group by using the target group as a granularity. Because watermarks are added to the plurality of pieces of to-be-processed data by using the group as the granularity, although the to-be-processed data in the group is modified due to watermark adding, new data obtained by modifying the to-be-processed data still belongs to one piece of to-be-processed data previously placed in the target group. Therefore, after the watermarks are added to the to-be-processed data, the to-be-processed data changes within a range of a small amount of to-be-processed data included in the target group, and does not change within a range of all the to-be-processed data, thereby alleviating a problem that the data is severely distorted after watermark adding. In addition, if the plurality of pieces of to-be-processed data are grouped more properly, for example, to-be-processed data with similar semantics may be placed in a same group, the to-be-processed data in the target group may have a smaller data difference after watermark adding, so that a data distortion problem can be more effectively alleviated. In addition, the target group may be some of the plurality of groups. Therefore, during watermark adding, watermarks may be added to only some of the plurality of pieces of to-be-processed data, and remaining to-be-processed data may be prevented from being modified due to watermark adding, so that a data distortion problem can be further alleviated.

In a possible implementation, each piece of to-be-processed data includes an attribute value of a target attribute, and the target attribute may be any one of at least one attribute included in the to-be-processed data. In this way, when the watermarks are added to the to-be-processed data in the target group, the watermarks may be specifically added to the to-be-processed data in the target group based on attribute values of the target attribute in the to-be-processed data in the target group. In this way, after the watermarks are added to the to-be-processed data in the target group, attribute values of the target attribute of to-be-processed data including the watermarks still fall within a range of the attribute values included in the target group, and may not belong to an attribute value range corresponding to another group. Therefore, an attribute value change caused after the watermarks are added to the to-be-processed data can be reduced, so that a distortion problem that occurs after the watermarks are added to the to-be-processed data can be alleviated.

In a possible implementation, attribute values of the target attribute in different to-be-processed data in a same group have semantics of a same type, and semantics of attribute values of the target attribute in to-be-processed data in different groups belongs to different types. In this way, the plurality of pieces of to-be-processed data may be grouped in advance based on semantics of attribute values of the target attribute in all the pieces of to-be-processed data. Therefore, after the watermarks are added to the to-be-processed data in the target group, the attribute values of the target attribute in the to-be-processed data still fall within an attribute value change range corresponding to the group, so that semantics of the attribute values of the target attribute in the to-be-processed data has a relatively small semantics change, thereby effectively preventing the to-be-processed data from being unavailable due to watermark adding.

In a possible implementation, an interaction interface may be further presented. The interaction interface may include a plurality of attribute values of the target attribute in the plurality of pieces of to-be-processed data. In this way, when the plurality of groups corresponding to the plurality of pieces of to-be-processed data are obtained, a result of grouping the plurality of pieces of to-be-processed data by a data owner on the interaction interface may be specifically obtained. In this way, the data owner can manually group the plurality of pieces of to-be-processed data based on the attribute values in the to-be-processed data, thereby improving freedom of the data owner for data grouping.

In a possible implementation, when the result of grouping the plurality of pieces of to-be-processed data by the data owner on the interaction interface is obtained, specifically, first, a plurality of attribute value groups may be obtained based on an operation of grouping the plurality of attribute values by the data owner on the interaction interface, where different attribute value groups include different attribute values. Then, to-be-processed data having attribute values in a target attribute value group may be placed in a same group, where the target attribute value group is any one of the plurality of attribute value groups. In this way, the plurality of pieces of to-be-processed data may be grouped based on grouping the attribute values by the data owner.

In a possible implementation, a key and a hash algorithm that are entered by the data owner on the interaction interface may be further received, where the key and the hash algorithm may be used to determine the watermarks added to the to-be-processed data in the target group. If the target group includes to-be-processed data 1 and to-be-processed data 2, it may be determined, based on the key and the hash algorithm, that a watermark added to the to-be-processed data 1 is the third bit in watermark data (it is assumed that the watermark data includes 32 bits), and it may be determined, based on the key and the hash algorithm, that a watermark added to the to-be-processed data 2 is the fourth bit in the watermark data. In this way, the data owner can customize a password and the hash algorithm required for watermark adding, thereby improving freedom and flexibility of watermark adding and improving user experience.

In a possible implementation, when the plurality of groups corresponding to the plurality of pieces of to-be-processed data are obtained, alternatively, the plurality of pieces of to-be-processed data may be divided into the plurality of groups based on attribute values in the plurality of pieces of to-be-processed data. In this way, the plurality of pieces of to-be-processed data can be automatically grouped, so that the data owner does not need to perform manual grouping, thereby reducing operations that need to be performed by the data owner, and improving efficiency of adding the watermarks to the plurality of pieces of to-be-processed data.

In a possible implementation, when the plurality of pieces of to-be-processed data are divided into the plurality of groups based on the attribute values in the plurality of pieces of to-be-processed data, specifically, first, semantics of the attribute values of the target attribute in the plurality of pieces of to-be-processed data may be identified, so that the plurality of pieces of to-be-processed data are divided into the plurality of groups based on the semantics of the attribute values of the target attribute in the plurality of pieces of to-be-processed data. For example, clustering may be performed based on the semantics of the attribute values of the target attribute in the plurality of pieces of to-be-processed data, so that each type corresponds to one group. In this way, different groups in the plurality of obtained groups correspond to attribute value semantics of different types.

In a possible implementation, watermark data added to the plurality of pieces of to-be-processed data includes an error-correcting code. Certainly, in another possible implementation, the watermark data may be other data, for example, a bit string that is all 0s or all 1s.

In a possible implementation, the target group is any one of the plurality of groups. Therefore, during watermark adding, watermarks may be added to to-be-processed data in each group, to add corresponding watermark information to all the to-be-processed data.

This application provides an apparatus for recommending a third-party library. The apparatus for recommending a third-party library includes modules configured to implement the method for recommending a third-party library in any one of the first aspect or the possible implementations of the first aspect.

According to a third aspect, this application provides an apparatus for adding a watermark to data. The apparatus includes modules configured to implement the method for adding a watermark to data in any one of the first aspect or the possible implementations of the first aspect.

According to a fourth aspect, this application provides a computing device. The computing device includes a processor and a memory. The memory is configured to store instructions. When the computing device runs, the processor executes the instructions stored in the memory, to enable the computing device to perform the method for adding a watermark to data in any one of the first aspect or the implementations of the first aspect. It should be noted that the memory may be integrated into the processor, or may be independent of the processor. The computing device may further include a bus.

The processor is connected to the memory by using the bus. The memory may include a readable memory and a random access memory.

According to a fifth aspect, this application provides a computer-readable storage medium. The computer-readable storage medium stores instructions. When the instructions run on a computing device, the computing device is enabled to perform the method for adding a watermark to data in any one of the first aspect or the implementations of the first aspect.

According to a sixth aspect, this application provides a computer program product including instructions. When the computer program product runs on a computing device, the computing device is enabled to perform the method for adding a watermark to data in any one of the first aspect or the implementations of the first aspect.

In this application, the implementations provided in the foregoing aspects may be further combined to provide more implementations.

**BRIEF DESCRIPTION OF DRAWINGS**

FIG. 1 is a schematic diagram of an example application scenario according to an embodiment of this application;

FIG. 2 is a schematic diagram of adding watermarks to four pieces of data;

FIG. 3 is another schematic diagram of adding watermarks to four pieces of data;

FIG. 4 is a schematic flowchart of a method for adding a watermark to data according to an embodiment of this application;

FIG. 5 is a schematic diagram of an interaction interface according to an embodiment of this application;

FIG. 6 is a schematic diagram of grouping a plurality of pieces of to-be-processed data by a data owner on an interaction interface according to an embodiment of this application;

FIG. 7 is a schematic diagram of a structure of an apparatus for adding a watermark to data according to an embodiment of this application; and

FIG. 8 is a schematic diagram of a structure of a computing device according to an embodiment of this application.

**DESCRIPTION OF EMBODIMENTS**

In the specification, claims, and accompanying drawings of this application, the terms such as "first" and "second" are intended to distinguish between similar objects but do not necessarily describe a specific order or sequence. It should be understood that the terms used in such a manner are interchangeable in proper circumstances, and this is merely a distinguishing manner used when objects with a same attribute are described in the embodiments of this application.

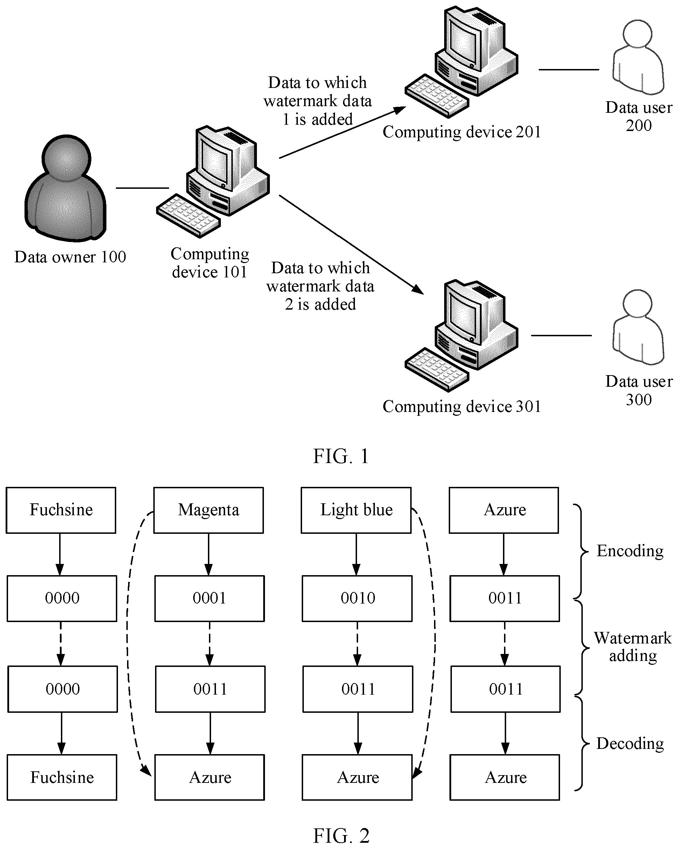

FIG. 1 is a schematic diagram of a possible application scenario according to an embodiment of this application. In this scenario, a data owner 100 may separately provide a plurality of pieces of to-be-processed data in a database for a data user 200 and a data user 300. In actual application, the data owner 100 may provide data for more data users. Before providing the plurality of pieces of to-be-processed data, the data owner 100 may add watermark data 1 to the plurality of pieces of to-be-processed data by using a computing device 101, and send, to the data user 200 by using the computing device 101 (or another device), a plurality of pieces of to-be-processed data to which the watermark data 1 is added. The data user 200 may receive the data by using a computing device 201. In addition, the data owner 100 may add watermark data 2 to the plurality of pieces of to-be-processed data by using the computing device 101, and send, to the data user 300 by using the computing device 101, a plurality of pieces of to-be-processed data to which the watermark data 2 is added. The data user 300 may receive the data by using a computing device 301.

The watermark data is secret information that is embedded in the database to perform copyright tracking for the database, and may be, for example, a character or bit string. In this way, when determining that data leakage occurs, the data owner 100 may extract watermark data from leaked data. If the extracted watermark data matches the watermark data 1, the data owner 100 may determine that data leakage exists when the data user 200 uses the plurality of pieces of to-be-processed data. If the extracted watermark data matches the watermark data 2, the data owner 100 may determine that data leakage exists when the data user 300 uses the plurality of pieces of to-be-processed data.

In actual application, when adding watermarks to a plurality of pieces of to-be-processed data in the database, the computing device 101 may encode watermark data into a bit string (if the watermark data is entered in a form of a bit string, encoding may not be performed), and then may split the bit string into one or more bits by using a corresponding algorithm, and add different bits to different to-be-processed data in the database. Specifically, some bits in bit strings corresponding to the to-be-processed data in the database are replaced with a same quantity of bits in the bit string corresponding to the watermark data. In this way, the watermark data can be embedded in the database. However, in this manner of adding watermarks to a plurality of pieces of to-be-processed data in the database, semantics of to-be-processed data having a watermark has a relatively large change after modification, and consequently the to-be-processed data that has the watermark and that is provided by the data owner 200 to the data user 200 or the data user 300 is unavailable.

For example, it is assumed that the database includes four pieces of data, and attribute values of a color attribute in the four pieces of data are sequentially "fuchsia", "magenta", "light blue", and "azure". In this case, in a process of adding watermarks to the four pieces of data, the attribute values of the color attribute in the four pieces of data may be first separately encoded to sequentially obtain bit strings "0000", "0001", "0010", and "0011 ". It is assumed that bits for adding watermarks to "magenta" and "light blue" are both "11". In this case, after watermark adding, a bit string corresponding to "magenta" is modified into "0011", and a bit string corresponding to "light blue" is modified into "0011", as shown in FIG. 2. After watermark adding, bit strings are decoded to obtain the following attribute values in the four pieces of data: "fuchsia", "azure", "azure", and "azure" in sequence. Therefore, after watermark adding, the attribute values of the color attribute in the four pieces of data are changed as follows: "magenta" is changed to "azure" and "light blue" is changed to "azure". (Herein, adding watermarks to two pieces of data is used as an example. In actual application, watermarks may be added to all the data.) Although an attribute value in the third piece of data is changed from "light blue" to "azure", the attribute value still has "blue" information. Therefore, after watermark adding, the third piece of data has a relatively small semantics deviation and a relatively small color information loss. However, an attribute value in the second piece of data is changed from "magenta" to "azure". The two colors are not associated with each other. Therefore, after watermark adding, the second piece of data has a relatively large semantics deviation and a relatively large color information loss. In actual application, there is a relatively high probability that the second piece of data is unavailable after watermark adding.

Based on this, the embodiments of this application provide a method for adding a watermark to data, to alleviate a problem that data is distorted after watermark adding, and prevent, as much as possible, that the data from being unavailable after watermark adding. Specifically, the computing device 101 first obtains a plurality of pieces of to-be-processed data (for example, the foregoing data that needs to be provided for the data user 200 or the data user 300) to which watermarks need to be added, for example, the foregoing data in which the attribute values are sequentially "fuchsia", "magenta", "light blue", and "azure". Then, the computing device 101 may further obtain a plurality of groups corresponding to the plurality of pieces of to-be-processed data, where the plurality of groups include a target group. After obtaining the plurality of groups based on the plurality of pieces of to-be-processed data, the computing device 101 adds watermarks to to-be-processed data in the target group by using the target group as a granularity.

Because watermarks are added to the plurality of pieces of to-be-processed data by using the group as the granularity, although the to-be-processed data in the group is modified due to watermark adding, new data obtained through modification still belongs to one piece of to-be-processed data previously placed in the target group. Therefore, after the watermarks are added to the to-be-processed data, the to-be-processed data changes within a range of a small amount of to-be-processed data included in the target group, and does not change within a range of all the to-be-processed data, thereby alleviating a problem that the data is severely distorted after watermark adding. In addition, if the plurality of pieces of to-be-processed data are grouped more properly, for example, to-be-processed data with similar semantics may be placed in a same group, the to-be-processed data in the target group may have a smaller data difference after watermark adding, so that a data distortion problem can be more effectively alleviated. In addition, the target group may be some of the plurality of groups. Therefore, during watermark adding, watermarks may be added to only some of the plurality of pieces of to-be-processed data, and remaining to-be-processed data may be prevented from being modified due to watermark adding, so that a data distortion problem can be further alleviated. This can effectively alleviate a severe data distortion problem while maintaining a capability of implementing source tracing by using watermark information.

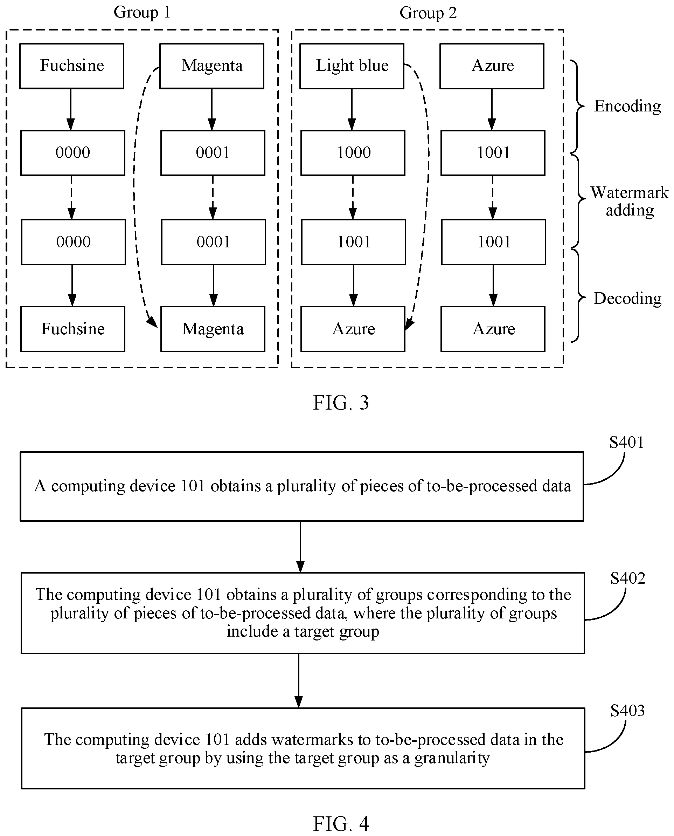

The foregoing four pieces of data in which the attribute values of the target attribute are sequentially "fuchsia", "magenta", "light blue", and "azure" are still used as an example, as shown in FIG. 3. When watermarks need to be added to the four pieces of data, first, the first piece of data and the second piece of data may be placed in a group 1 based on "fuchsia" and "magenta", and the third piece of data and the fourth piece of data may be placed in a group 2 based on "light blue" and "azure". In a process of encoding data in different groups, bit strings corresponding to the data in the different groups may be distinguished from each other by using most significant bits. As shown in FIG. 3, bit strings obtained by encoding the attribute values in the first piece of data and the second piece of data that are placed in the group 1 are "0000" and "0001", and bit strings obtained by encoding the attribute values in the third piece of data and the fourth piece of data that are placed in the group 2 are " 1000" and "1001", that is, a most significant bit of a bit string corresponding to the group 1 is 0, and a most significant bit of a bit string corresponding to the group 2 is 1. In a process of adding watermarks to data in each group, because each group includes only two pieces of data, a part "11" of a bit string of watermark data may be split into two bits " 1" and " 1". The two bits are respectively added to the data in the group 1 and the data in the group 2, and are specifically added to the last bits of bit strings corresponding to all the groups. For example, watermarks are added to the second piece of data placed in the group 1 and the third piece of data placed in the group 2. After a watermark is added to the second piece of data, a bit string corresponding to "magenta" is updated from "0001" to "0001" (remains unchanged). After a watermark is added to the third piece of data, a bit string corresponding to "light blue" is updated from "1000" to "1001". Correspondingly, when bit strings having watermark information are subsequently decoded, attribute values respectively corresponding to the four pieces of data are sequentially "fuchsia", "magenta", "azure", and "azure". In this way, after watermark adding, color information in the second piece of data remains unchanged and is still "magenta", and color information in the third piece of data is changed from "light blue" to "azure", but still has "blue" information. Therefore, after watermark adding, the second piece of data and the third piece of data have a relatively small color information loss.

In actual application, the foregoing method for adding a watermark to data may be implemented by hardware with a computing capability, where the hardware may be, for example, a computing device such as a server, or may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof to implement a function of the foregoing network element or module. Alternatively, the foregoing method for adding a watermark to data may be implemented by software. For example, the computing device 101 may download, install, and run a corresponding plug-in, to enable the computing device 101 to implement the foregoing method.

For ease of understanding, the following describes the embodiments of this application with reference to the accompanying drawings.

FIG. 4 is a schematic flowchart of a method for adding a watermark to data according to an embodiment of this application. A method procedure shown in FIG. 4 may be implemented by the foregoing computing device 101. For ease of understanding and description, the following provides example descriptions by using an example in which the method for adding a watermark to data shown in FIG. 4 is applied to the computing device 101 shown in FIG. 1. The method may specifically include the following steps.

S401: The computing device 101 obtains a plurality of pieces of to-be-processed data.

In actual application, a data owner 100 may operate and maintain at least one database (database, DB), and the database may include a plurality of pieces of to-be-processed data provided for a data user 200 (or a data user 300). For example, the plurality of pieces of to-be-processed data may constitute a data set (data set) in the database. The data set is a set of structured data, and may be represented in a form of a table. Data of each row in the table may be one piece of to-be-processed data. In addition, the data of each row may include a plurality of columns. Data of one of the plurality of columns is used as an identifier, for example, a number, of the to-be-processed data in the data set. Data of one or more remaining columns in the plurality of columns is used as an attribute value of the to-be-processed data. Data of each column corresponds to one attribute of the to-be-processed data.

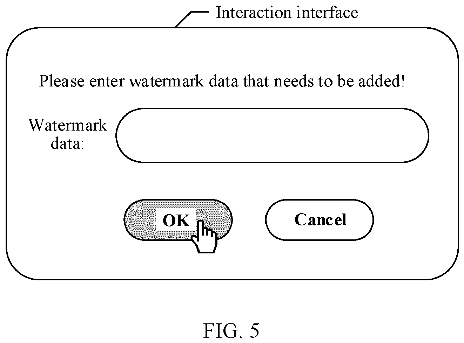

Before providing the plurality of pieces of to-be-processed data for the data user 200 (or the data user 300), the data owner 100 may add watermarks to the plurality of pieces of to-be-processed data by using the computing device 101. Therefore, the data owner 100 may enter, into the computing device 101, the plurality of pieces of to-be-processed data that need to be provided. Further, the data owner 100 may further enter, into the computing device, watermark data that needs to be added. As an example, when obtaining the plurality of pieces of to-be-processed data, the computing device 101 may present an interaction interface shown in FIG. 5 to the data owner 100, so that the data owner 100 enters, on the interaction interface, the watermark data that needs to be added. In another possible implementation, the computing device 101 may automatically generate watermark data for the plurality of pieces of to-be-processed data, for example, may use related information of the data user 200 (or the data user 300) as the watermark data. In this embodiment, a specific implementation in which the computing device 101 obtains the watermark data is not limited.

In some actual application scenarios, for the to-be-processed data provided by the data owner 100, the computing device 101 may add a watermark to only a part of the to-be-processed data, and remaining to-be-processed data may be specified by the data owner 100 or independently determined by the computing device 101. In this way, a data amount of to-be-processed data processed by the computing device 101 can be reduced, and efficiency of adding a watermark by the computing device 101 can be improved. Correspondingly, in this embodiment, the plurality of pieces of to-be-processed data to which the watermark data is to be added may be a part of or all of all data provided by the data owner 100 for the data user 200 (or the data user 300).

S402: The computing device 101 obtains a plurality of groups corresponding to the plurality of pieces of to-be-processed data, where the plurality of groups include a target group.

The target group may be any one of the plurality of groups. In this way, the computing device 101 may subsequently perform a watermark adding processing process on the to-be-processed data in all the groups. In another possible implementation, the target group may be some of the plurality of groups. In this way, the computing device 101 may subsequently process to-be-processed data (a part of the plurality of obtained to-be-processed data) in only some of the groups. For ease of understanding, the following provides example descriptions by using an example in which the target group is any one of the plurality of groups.

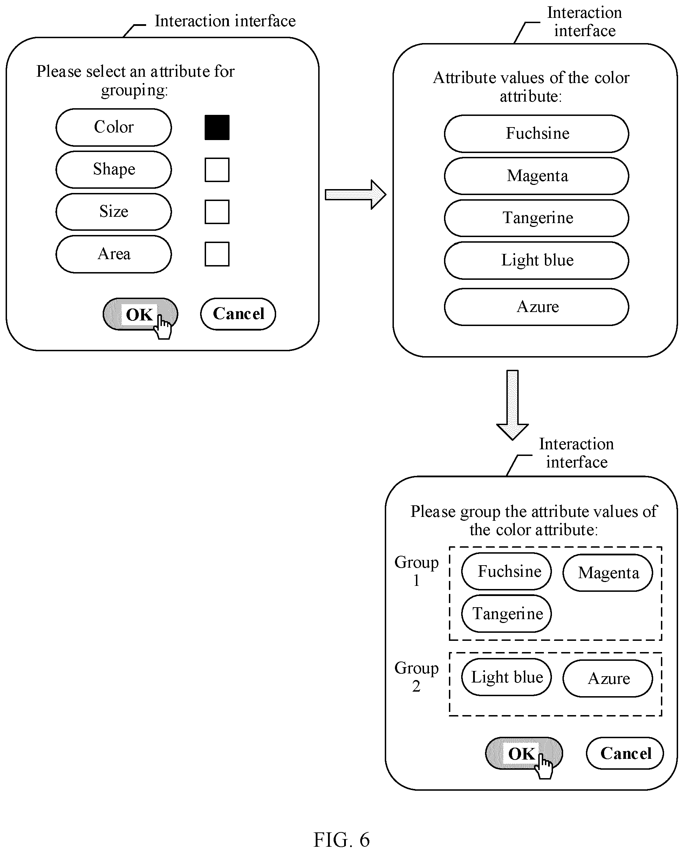

In this embodiment, the data owner 100 may group the plurality of pieces of to-be-processed data. In a possible implementation, the computing device 101 may obtain a result of grouping the plurality of pieces of to-be-processed data by the data owner 100 on an interaction interface. For example, the computing device 101 may present, to the data owner 100, an interaction interface shown in FIG. 6, where the interaction interface may present a plurality of attributes, for example, "color", "shape", "size", and "area" shown on a left side in FIG. 6, of a plurality of pieces of to-be-processed data (in actual application, the plurality of pieces of to-be-processed data may alternatively have only one attribute); and prompt the data owner 100 to select one attribute to group the plurality of pieces of to-be-processed data. For ease of distinguishing, an attribute selected by the data owner 100 is referred to as a target attribute below. The data owner 100 may select the target attribute, for example, the "color" attribute, on the interaction interface in a clicking manner or the like. Correspondingly, the computing device 101 may determine, by traversing the plurality of pieces of to-be-processed data, attribute values of the target attribute in the plurality of pieces of to-be-processed data, and present the attribute values to the data owner 100. For example, when the target attribute is specifically the "color" attribute, the interaction interface may present attribute values, for example, "fuchsia", "magenta", "tangerine", "light blue", and "azure" shown on an upper right side in FIG. 6. In this way, the data owner 100 may further group the plurality of attribute values on the interaction interface based on semantics of the attribute values, and may specifically place, in a same group, attribute values whose semantics belongs to a same semantics type, so that a plurality of attribute value groups may be obtained. Different attribute value groups include different attribute values. For example, as shown on a lower right side in FIG. 6, the data owner 100 may place, in a group 1, to-be-processed data in which attribute values are "fuchsia", "magenta", and "tangerine", and place, in a group 2, to-be-processed data in which attribute values are "light blue" and "azure". Attribute values in to-be-processed data in each group belong to a same type of color system. For example, the attribute values in the to-be-processed data in the group 1 all belong to a red color system, and attribute values in the to-be-processed data in the group 2 all belong to a blue color system. In actual application, content on the interaction interface shown in FIG. 5 may be further displayed, in an integrated manner, on the interaction interface shown in FIG. 6. This is not limited in this embodiment. Then, for any one of the plurality of attribute value groups, referred to as a target attribute value group below, the computing device 101 may place, in a same group, to-be-processed data having attribute values in the target attribute value group. In this way, the computing device 101 may group the plurality of pieces of to-be-processed data based on attribute values included in each attribute value group, to obtain a plurality of groups corresponding to the plurality of pieces of to-be-processed data. In addition, to-be-processed data in each group has semantics of a same type, and different groups correspond to different semantics types.

In this embodiment, in addition to grouping the attribute values by the data owner 100 to group the to-be-processed data, in another possible implementation, the computing device 101 may automatically group the plurality of pieces of to-be-processed data. As an implementation example, the computing device 101 may select one attribute from the plurality of attributes of the plurality of pieces of to-be-processed data as the target attribute by using a random algorithm or in another manner, and obtain, through traversal, attribute values of the target attribute in the plurality of pieces of to-be-processed data. Usually, the computing device 101 may obtain a plurality of different attribute values through traversal. Then, the computing device 101 may perform semantics identification on the attribute values, and place, in a same group based on semantics of the attribute values, attribute values having same or similar semantics. For the plurality of different attribute values, a plurality of different groups may be usually obtained, so that the computing device 101 may group, based on grouping of the attribute values, the to-be-processed data having the attribute values. In a process of grouping the attribute values, the computing device 101 may cluster attribute values having same or similar semantics, so that each clustering type corresponds to one group. Alternatively, one or more semantics types may be preconfigured in the computing device 101. In this way, the computing device 101 may search, based on semantics of each attribute value, for a semantics type to which the semantics of the attribute value belongs, and further place the attribute value in a found semantics type, to group the attribute values; and then group the plurality of pieces of to-be-processed data based on grouping of the attribute values.

It should be understood that the foregoing two implementations are merely used to provide example descriptions of a process in which the computing device 101 obtains the plurality of groups corresponding to the plurality of pieces of to-be-processed data. In actual application, the computing device 101 may obtain, in another manner, the groups to which the to-be-processed data belongs. This is not limited in this embodiment. For example, based on the foregoing two implementations, the computing device 101 may first present an interaction interface shown on the left side in FIG. 6, so that the data owner 100 selects the target attribute from the plurality of attributes on the interaction interface. Then, the computing device 101 may further group the plurality of pieces of to-be-processed data based on the attribute values of the target attribute in a semantics identification manner.

S403: The computing device 101 adds watermarks to to-be-processed data in the target group by using the target group as a granularity.

In this embodiment, the computing device 101 may add the watermarks to the to-be-processed data in the target group. In this way, after the watermarks are added to the to-be-processed data, the to-be-processed data changes within a range of a small amount of to-be-processed data included in the target group, and does not change within a range of all the to-be-processed data, thereby alleviating a problem that the data is severely distorted after watermark adding.

In a specific implementation example, the computing device 101 may encode the obtained watermark data, to obtain a bit string corresponding to the watermark data. For example, the computing device 101 may directly encode the obtained watermark data into a bit string that is all 0s or all 1s, or encode the obtained watermark data into another fixed bit string. Alternatively, the computing device 101 may encode the watermark data by using an error-correcting code (error-correcting code, ECC), for example, a Hamming code (Hamming code) or a Reed-Solomon code (Reed-Solomon code, RS coding). For example, it is assumed that entered watermark data is "test". In this case, the computing device 101 may encode the watermark data "test" into a 32-bit bit string "0111 0100 01100101 0111 0011 0111 0100" by using an error-correcting code. In this way, robustness of adding the watermark data to the to-be-processed data can be improved.

In addition, the computing device 101 may further encode attribute values of the target attribute in the to-be-processed data in the target group. Specifically, for the target group, the computing device 101 may exhaustively list possible attribute values of the target attribute in the to-be-processed data in the group, and determine a quantity of different attribute values (referred to as enumerated values below). In this way, a quantity of enumerated values included in the target group may be determined, and a maximum quantity of enumerated values may be further determined from enumerated values respectively included in the plurality of groups, that is, one of the groups includes most enumerated values. In addition, the computing device 101 may collect statistics on a quantity of obtained groups. In this way, the computing device 101 may calculate, based on the maximum quantity of enumerated values included in a single group and the total quantity of groups and based on the following formula (1), a length S for encoding the attribute values of the target attribute in the to-be-processed data in the group:

$$S = \lceil \log_2 L \rceil + \lceil \log_2 N \rceil \quad (1),$$

where
L represents the quantity of groups, N represents the maximum quantity of enumerated values included in a single group, $\log_2 L$ represents an encoding length used to identify different groups and is rounded up, and $\log_2 N$ represents an encoding length used to identify different enumerated values in a single group and is rounded up.

For example, for a bit string whose encoding length is S, the computing device 101 may use most significant bits whose length is $\log_2 L$ in the bit string to represent a group number, and use least significant bits whose length is $\log_2 N$ in the bit string to represent different enumerated values. Certainly, this embodiment is not limited to this implementation. For example, alternatively, most significant bits may be used to represent different enumerated values, and least significant bits may be used to represent a group number. Alternatively, when an encoding length is determined, idle bits of a specific quantity may be added based on identification of a group number and enumerated values.

For example, it is assumed that there are four groups: a group 1, a group 2, a group 3, and a group 4, and quantities of enumerated values included in the groups are sequentially 4, 4, 4, and 5. In this case, an encoding length used to identify a group in a bit string is

$$\lceil \log_2 4 \rceil = 2$$

, where "00" may be used to identify the group 1, "01" may be used to identify the group 2, "10" may be used to identify the group 3, and "11" may be used to identify the group 4; and an encoding length used to identify different enumerated values in a single group

is $\lceil \log_2 5 \rceil = 3$, where "000", "001", "010", "011", and "100" may be used to respectively identify five different enumerated values. In this case, when encoding enumerated values in each group, the computing device 101 may encode the enumerated values into bit strings each including five bits, where two most significant bits are used to identify different groups, and three least significant bits are used to identify different enumerated values in the group. For example, encoded bit strings corresponding to four enumerated values in the group 1 are respectively "00000", "00001", "00010", and "00011", and encoded bit strings corresponding to five enumerated values in the group 4 are respectively "11000", "11001", "11010", "11011", and "11100".

Then, for the target group, the computing device 101 may add the watermarks to the to-be-processed data in the target group, and may specifically modify some bits in encoded bit strings corresponding to attribute values (enumerated values) in the to-be-processed data in the target group into some bits in the encoded bit string corresponding to the watermark data. For example, when adding a watermark to one piece of to-be-processed data in the target group, the computing device 101 may determine, from the encoded bit string corresponding to the watermark data based on a pre-obtained key (key) and a preset hash function H, a start bit of the watermark that needs to be added, and then determine, based on a quantity of enumerated values included in the target group, a target quantity of bits of a watermark added in the target group, where the target quantity is $\lfloor \log_2 N_{\text{target}} \rfloor$ (rounded down), and $N_{\text{target}}$ represents the quantity of enumerated values included in the target group. Therefore, the computing device 101 may add bits that are of the target quantity and that start from the start bit in the encoded bit string corresponding to the watermark data to the to-be-processed data as the watermark. In another embodiment, the target quantity may be $\lfloor \log_2 N_{\min} \rfloor$, where $N_{\min}$ is a minimum value of a quantity of enumerated values included in a single group.

For example, it is assumed that the encoded bit string corresponding to the watermark data is the foregoing "0111 0100 0110 0101 0111 0011 0111 0100". When adding a watermark to to-be-processed data whose number is $P_k$ in the target group, the computing device 101 may calculate, by using the following formulas (2) and (3), a start bit idx in the encoded bit string corresponding to the watermark data:

$$\mathrm{idx} = H(key, P_k)\%M \quad (2);$$

and

$$M = |wm| - \lfloor \log_2 N_{\mathrm{target}} \rfloor \quad (3),$$

where
$H$ is the hash algorithm, $key$ is the key, $P_k$ is an identifier of the to-be-processed data to which a watermark is currently added, for example, a primary key (used to uniquely identify the to-be-processed data in the database) of the to-be-processed data in the database, $|wm|$ represents a length of the encoded bit string corresponding to the watermark data and $|wm|$ is 32 in this example, and $len(L_{\mathrm{target}})$ represents the target quantity of bits of a watermark added to the target group.

It is assumed that an encoded bit string corresponding to one piece of to-be-processed data in a group 4 is "11010", and when adding a watermark to the to-be-processed data, the computing device 101 determines, through calculation based on a primary key $P_k$ of the to-be-processed data, the pre-determined key (key), the hash algorithm H, the length $|wm|$ of the encoded bit string corresponding to the watermark data, and the target quantity $\lfloor \log_2 N_{\mathrm{target}} \rfloor$ of bits of a watermark added to the target group, that idx is 2. In addition, $\lfloor \log_2 N_{\mathrm{target}} \rfloor = 2$. In this case, the computing device 101 may determine to consecutively select, starting from the second bit (from left to right) from the encoded bit string "0111 0100 0110 0101 0111 0011 0111 0100" corresponding to the watermark data, two bits as the watermark added to the to-be-processed data. The watermark is "11", namely, the second bit and the third bit in the encoded bit string. In this case, after watermark adding, the encoded bit string corresponding to the to-be-processed data is adjusted from "11010" to "11011" (in this embodiment, for example, the watermark is added to the last two bits in the encoded bit string).

The key (key) and the hash function H that are used to calculate idx may be specified by the data owner 100. For example, the computing device 101 may present an interaction interface to the data owner 100 in advance, so that the data owner 100 may enter a corresponding key (key) and a specific hash algorithm H on the interaction interface. Certainly, in another possible embodiment, the computing device 101 may set the key (key), the hash function H, and the like. Optionally, a quantity of bits added by the computing device 101 to to-be-processed data in each group as a watermark may be specified by the data owner 100, without being determined by the computing device 101 through automatic calculation.

It is worthwhile to note that, when to-be-processed data in each group obtained by the computing device 101 has semantics of a same type, and different groups correspond to different semantics types, because the computing device 101 adds the watermarks to the to-be-processed data in the target group, after the watermarks are added to the to-be-processed data, the attribute values of the target attribute in the to-be-processed data still fall within an attribute value range corresponding to the target group. In addition, because the attribute values in the target group are similar or the same (belong to a same semantics type), after the watermarks are added to the to-be-processed data, semantics of the attribute values of the target attribute in the to-be-processed data has a relatively small change.

It is worthwhile to note that, for different to-be-processed data with a same attribute value of the target attribute in the target group, because the different to-be-processed data has different primary keys, even if the different to-be-processed data has the same attribute value of the target attribute, watermarks added by the computing device 101 to the different to-be-processed data may be different. For example, when adding watermarks to to-be-processed data 1 and to-be-processed data 2 that have a same encoded bit string "11010", the computing device 101 determines, based on a primary key of the to-be-processed data 1, that a watermark added to an encoded bit string corresponding to the to-be-processed data 1 is "11", and determines, based on a primary key of the to-be-processed data 2, that a watermark added to an encoded bit string corresponding to the to-be-processed data 2 is "00". In this case, after watermark adding, the encoded bit string of the to-be-processed data 1 is changed from "11010" to "11011", and the encoded bit string of the to-be-processed data 2 is changed from "11010" to "11000".

It should be understood that, when a watermark is added to to-be-processed data in the target group, a larger quantity of bits of the added watermark indicates a stronger anti-attack capability of the watermark. For example, it is assumed that the quantity of bits of the watermark added to the target group is 1. In this case, after data of a bit representing the watermark is modified because the to-be-processed data is attacked, all watermark information is lost. If the quantity of bits of the watermark added to the target group is 3, even if data of one bit representing the watermark is modified because the to-be-processed data is attacked, information of two remaining bits representing the watermark is still retained, that is, the watermark has a relatively stronger anti-attack capability.

In actual application, the data owner 100 provides a relatively large quantity of to-be-processed data. Therefore, the watermarks respectively added by the computing device 101 to the plurality of pieces of to-be-processed data may usually cover all bits in the encoded bit string corresponding to the watermark data, so that the complete watermark data can be added to the plurality of pieces of to-be-processed data. After the watermarks are added to the plurality of pieces of to-be-processed data, only attribute values of the target attribute may change, and attribute values of remaining attributes may remain unchanged. In some examples, the computing device 101 may directly send a plurality of pieces of to-be-processed data having the watermarks to the data user 200 by using a network. Alternatively, the computing device 101 may first create a new data set based on the plurality of pieces of to-be-processed data to which the watermarks are added, and then send the new data set to the data user 200. Alternatively, the computing device 101 may replace, with the plurality of pieces of to-be-processed data to which the watermarks are added, the plurality of pieces of to-be-processed data that is stored in the database and that does not have the watermarks, to perform data update on the database.

After providing, for the data user 200, the plurality of pieces of to-be-processed data to which the watermarks are added, when determining that data leakage exists, the data owner 100 may determine, by using the watermarks, whether the data user 200 leaks data.

During specific implementation, the data owner 100 may extract watermark information from a plurality of pieces of leaked to-be-processed data, and determine, through comparison, whether extracted watermarks are consistent with previously used watermarks sent to the data user 200. If the extracted watermarks are consistent with the previously used watermarks sent to the data user 200, the data owner 100 may determine that the data user 200 has data leakage behavior. If the extracted watermarks are inconsistent with the previously used watermarks sent to the data user 200, the data owner 100 may determine that the data user 200 does not leak data. In actual application, when sending data to different data users, the data owner 100 may use watermark data to add watermark information to the provided data.

The following describes a process in which the computing device 101 extracts watermark data from a plurality of pieces of to-be-processed data. In an actual application scenario, the plurality of pieces of to-be-processed data may be collected data that has been leaked to an unauthorized user.

When extracting the watermark data from the plurality of pieces of to-be-processed data, the computing device 101 may first create a corresponding quantity of counters based on a quantity of bits in an encoded bit string corresponding to the watermark data. Each counter is configured to extract, from the plurality of pieces of to-be-processed data, quantities of times that a corresponding bit in the encoded bit string corresponding to the watermark data is 0 and 1.

Then, for each piece of to-be-processed data, the computing device 101 may deduce, based on a primary key $P_k$, a key (key), a hash algorithm H, and a quantity of bits of a watermark added to the to-be-processed data, bits that are of the watermark data and whose values correspond to values of specific bits of encoded bits corresponding to an attribute value of the target attribute in the to-be-processed data, to perform counting, by adding 1, on the values of the bits by using counters corresponding to the bits. For example, it is assumed that the attribute value of the target attribute in the to-be-processed data is encoded into "11011", and the quantity of bits of the watermark added to the to-be-processed data is 2. If it is deduced that a watermark "11" in "11011" is the second bit and the third bit in the encoded bit string corresponding to the watermark data, a counter corresponding to the second bit may be used to add 1 to a quantity of times that a value of the second bit is 1, and a quantity of times that the value of the second bit is 0 remains unchanged; and a counter corresponding to the third bit may be used to add 1 to a quantity of times that a value of the third bit is 1, and a quantity of times that the value of the third bit is 0 remains unchanged. For each piece of to-be-processed data, the computing device 101 may perform the foregoing process. In this way, a counter corresponding to each bit in the encoded bit string of the watermark data completes counting on quantities of times that a value of the corresponding bit is 0 and 1.

Then, for each counter, the computing device 101 may compare a counting result of the counter for a value 0 and a counting result of the counter for a value 1. In an ideal case (for example, in a case in which data is not attacked or no error occurs), in the counting results obtained by the counter, a count for a value 0 or a value 1 is 0, and a count for the other value is not 0. In this case, a value of a bit that is in the encoded bit string of the watermark data and that corresponds to the counter is the value whose count is not 0. For example, it is assumed that counting results of a counter corresponding to the first bit in the encoded bit string of the watermark data indicate that a counting result for a value 0 is 80 and a counting result for a value 1 is 0. In this case, a value of the first bit in the encoded bit string of the watermark data is 0. For another example, it is assumed that counting results of a counter corresponding to the second bit in the encoded bit string of the watermark data indicate that a counting result for a value 0 is 0 and a counting result for a value 1 is 100. In this case, a value of the second bit in the encoded bit string of the watermark data is 1. The rest may be deduced from this.

In actual application, in counting results obtained by a counter, due to an attack or an error in partial data, the counting results of the counter may indicate that neither of counting quantities for a value 0 and a value 1 is 0. In this case, the computing device 101 may compare the counting quantities of the counter for the value 0 and the value 1, and use a value corresponding to a larger counting quantity as a value of a corresponding bit in the encoded bit string of the watermark data. For example, it is assumed that counting results of a counter corresponding to the first bit in the encoded bit string of the watermark data indicate that a counting result for a value 0 is 70 and a counting result for a value 1 is 10. Because the counting result (70) for the value 0 is greater than the counting result (10) for the value 1, the computing device 101 may determine that a value of the first bit in the encoded bit string of the watermark data is 0. For another example, it is assumed that counting results of a counter corresponding to the second bit in the encoded bit string of the watermark data indicate that a counting result for a value 0 is 15 and a counting result for a value 1 is 85. Because the counting result (15) for the value 0 is less than the counting result (85) for the value 1, the computing device 101 may determine that a value of the second bit in the encoded bit string of the watermark data is 1. The rest may be deduced from this.

In this way, values of the bits in the encoded bit string corresponding to the watermark data may be determined by using counting results of the plurality of counters, so that the encoded bit string may be decoded, to obtain the corresponding watermark data through inverse calculation. A process of obtaining the watermark data through decoding based on the encoded bit string is an inverse process of obtaining the bit string through encoding based on the watermark data, and therefore is not described in detail in this embodiment. In this way, the watermark data may be extracted from the plurality of pieces of to-be-processed data, so that the computing device 101 determines, based on the extracted watermark data, whether a data user leaks data.

The foregoing describes, in detail with reference to FIG. 1 to FIG. 6, the method for adding a watermark to data provided in the embodiments of this application. The following describes, from a perspective of a functional unit with reference to the accompanying drawings, an apparatus for adding a watermark to data provided in the embodiments of this application.

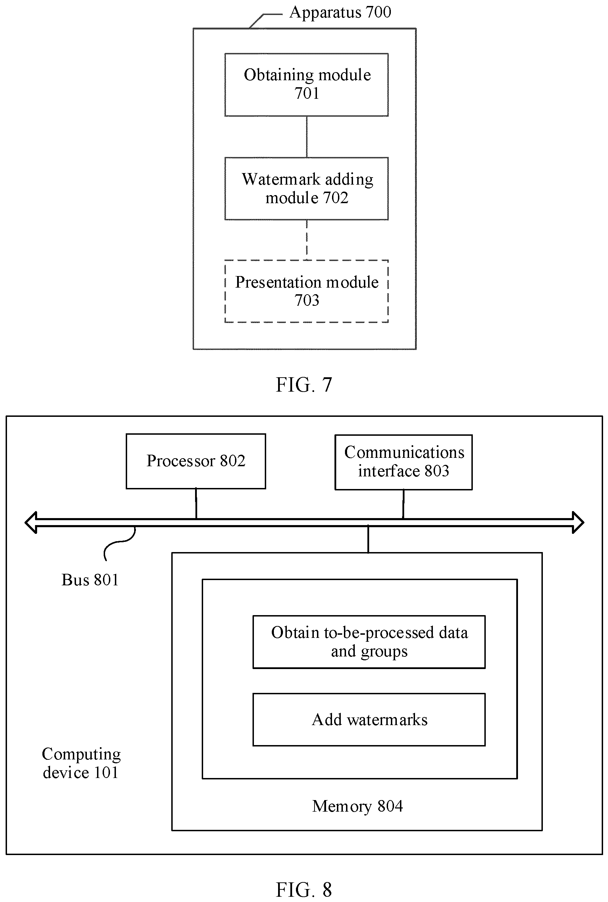

Referring to a schematic diagram of a structure of an apparatus for adding a watermark to data in FIG. 7, an apparatus 700 may be applied to the computing device 101 shown in FIG. 4, and the apparatus 700 includes:

an obtaining module 701, configured to: obtain a plurality of pieces of to-be-processed data, and obtain a plurality of groups corresponding to the plurality of pieces of to-be-processed data, where the plurality of groups include a target group; and
a watermark adding module 702, configured to add watermarks to to-be-processed data in the target group by using the target group as a granularity.

In a possible implementation, each piece of to-be-processed data includes an attribute value of a target attribute.

The watermark adding module 702 is specifically configured to add the watermarks to the to-be-processed data in the target group based on attribute values of the target attribute in the to-be-processed data in the target group.

In a possible implementation, attribute values of the target attribute in different to-be-processed data in a same group have semantics of a same type, and semantics of attribute values of the target attribute in to-be-processed data in different groups belongs to different types.

In a possible implementation, the apparatus 700 further includes:

a presentation module 703, configured to present an interaction interface, where the interaction interface includes a plurality of attribute values of the target attribute in the plurality of pieces of to-be-processed data.

The obtaining module 701 is specifically configured to obtain a result of grouping the plurality of pieces of to-be-processed data by a data owner on the interaction interface.

In a possible implementation, the obtaining module 701 is specifically configured to:

obtain a plurality of attribute value groups based on an operation of grouping the plurality of attribute values by the data owner on the interaction interface, where different attribute value groups include different attribute values; and
place, in a same group, to-be-processed data having attribute values in a target attribute value group, where the target attribute value group is any one of the plurality of attribute value groups.

In a possible implementation, the obtaining module 701 is further configured to receive a key and a hash algorithm that are entered by the data owner on the interaction interface, where the key and the hash algorithm are used to determine the watermarks added to the to-be-processed data in the target group.

In a possible implementation, the obtaining module 701 is specifically configured to divide the plurality of pieces of to-be-processed data into a plurality of groups based on attribute values in the plurality of pieces of to-be-processed data.

In a possible implementation, the obtaining module 701 is specifically configured to:

identify semantics of the attribute values of the target attribute in the plurality of pieces of to-be-processed data; and

divide the plurality of pieces of to-be-processed data into the plurality of groups based on the semantics of the attribute values of the target attribute in the plurality of pieces of to-be-processed data.

In a possible implementation, watermark data added to the plurality of pieces of to-be-processed data includes an error-correcting code.

In a possible implementation, the target group is any one of the plurality of groups.

The apparatus 700 for adding a watermark to data according to this embodiment of this application may correspondingly perform the method described in the embodiments of this application, and the foregoing and other operations and/or functions of the modules of the apparatus 700 for adding a watermark to data are respectively used to implement the corresponding method procedures performed by the computing device in FIG. 4. For brevity, details are not described herein.

In the foregoing embodiments, a process of adding a watermark to data may be alternatively implemented by a separate hardware device. The following describes in detail a computing device that implements the process of adding a watermark to data.

FIG. 8 is a schematic diagram of a structure of a computing device. A computing device 101 shown in FIG. 8 may be specifically configured to implement the function of the computing device 101 in the embodiment shown in FIG. 4.

The computing device 101 includes a bus 801, a processor 802, a communications interface 803, and a memory 804. The processor 802, the memory 804, and the communications interface 803 communicate with each other by using the bus 801. The bus 801 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 8, but this does not mean that there is only one bus or only one type of bus. The communications interface 803 is configured to communicate with the outside, for example, receive a target service request sent by a software developer plane function network element.

The processor 802 may be a central processing unit (central processing unit, CPU). The memory 804 may include a volatile memory (volatile memory), for example, a random access memory (random access memory, RAM). Alternatively, the memory 804 may include a non-volatile memory (non-volatile memory), for example, a read-only memory (read-only memory, ROM), a flash memory, an HDD, or an SSD.

The memory 804 stores executable code, and the processor 802 executes the executable code to perform the foregoing method performed by the computing device 101.

Specifically, when the embodiment shown in FIG. 4 is implemented, software or program code required for performing the function of the computing device 101 in FIG. 4 is stored in the memory 804. Interaction between the computing device 101 and another device is implemented by using the communications interface 803. For example, the computing device 101 obtains a plurality of pieces of to-be-processed data in a data source by using the communications interface 803. The processor is configured to execute instructions in the memory 804, to implement the method performed by the computing device 101.

In addition, an embodiment of this application further provides a computer-readable storage medium. The computer-readable storage medium stores instructions. When the instructions run on a computing device, the computing device is enabled to perform the method in the foregoing embodiment.

An embodiment of this application further provides a computer program product. When the computer program product is executed by a computer, the computer performs any one of the foregoing data providing methods. The computer program product may be a software installation package. When any one of the foregoing data providing methods needs to be used, the computer program product may be downloaded and the computer program product may be executed on a computer.

In addition, it should be noted that the described apparatus embodiment is merely an example. The units described as separate parts may or may not be physically separate, and parts displayed as units may or may not be physical units, that is, may be located in one position, or may be distributed on a plurality of network units. Some or all of the modules may be selected based on actual needs to achieve the objectives of the solutions of the embodiments. In addition, in the accompanying drawings of the apparatus embodiments provided in this application, connection relationships between modules indicate that the modules have communication connections with each other. This may be specifically implemented as one or more communications buses or signal cables.

Based on the foregoing descriptions of the implementations, a person skilled in the art may clearly understand that this application may be implemented by software and necessary universal hardware, or may be certainly implemented by dedicated hardware, including an application-specific integrated circuit, a dedicated CPU, a dedicated memory, a dedicated component, or the like. Generally, any function completed by a computer program can be easily implemented by corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in the embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to the embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1.  A method for adding a watermark to data, wherein the method comprises:

    obtaining a plurality of pieces of to-be-processed data;
    obtaining a plurality of groups corresponding to the plurality of pieces of to-be-processed data, wherein the plurality of groups comprise a target group; and
    adding watermarks to to-be-processed data in the target group by using the target group as a granularity.

2.  The method according to claim 1, wherein each piece of to-be-processed data comprises an attribute value of a target attribute; and
    the adding watermarks to to-be-processed data in the target group comprises:
    adding the watermarks to the to-be-processed data in the target group based on attribute values of the target attribute in the to-be-processed data in the target group.

3.  The method according to claim 2, wherein attribute values of the target attribute in different to-be-processed data in a same group have semantics of a same type, and semantics of attribute values of the target attribute in to-be-processed data in different groups belongs to different types.

4.  The method according to any one of claims 1 to 3, wherein the method further comprises:

    presenting an interaction interface, wherein the interaction interface comprises a plurality of attribute values of the target attribute in the plurality of pieces of to-be-processed data; and
    the obtaining a plurality of groups corresponding to the plurality of pieces of to-be-processed data comprises:
    obtaining a result of grouping the plurality of pieces of to-be-processed data by a data owner on the interaction interface.

5.  The method according to claim 4, wherein the obtaining a result of grouping the plurality of pieces of to-be-processed data by a data owner on the interaction interface comprises:

    obtaining a plurality of attribute value groups based on an operation of grouping the plurality of attribute values by the data owner on the interaction interface, wherein different attribute value groups comprise different attribute values; and
    placing, in a same group, to-be-processed data having attribute values in a target attribute value group, wherein the target attribute value group is any one of the plurality of attribute value groups.

6.  The method according to claim 4 or 5, wherein the method further comprises:
    receiving a key and a hash algorithm that are entered by the data owner on the interaction interface, wherein the key and the hash algorithm are used to determine the watermarks added to the to-be-processed data in the target group.

7. The method according to claim 2 or 3, wherein the obtaining a plurality of groups corresponding to the plurality of pieces of to-be-processed data comprises:

   dividing the plurality of pieces of to-be-processed data into a plurality of groups based on attribute values in the plurality of pieces of to-be-processed data.

8. The method according to claim 7, wherein the dividing the plurality of pieces of to-be-processed data into a plurality of groups based on attribute values in the plurality of pieces of to-be-processed data comprises:

   identifying semantics of the attribute values of the target attribute in the plurality of pieces of to-be-processed data; and
   dividing the plurality of pieces of to-be-processed data into the plurality of groups based on the semantics of the attribute values of the target attribute in the plurality of pieces of to-be-processed data.

9. The method according to any one of claims 1 to 8, wherein watermark data added to the plurality of pieces of to-be-processed data comprises an error-correcting code.

10. The method according to any one of claims 1 to 9, wherein the target group is any one of the plurality of groups.

11. An apparatus for adding a watermark to data, wherein the apparatus comprises:

    an obtaining module, configured to: obtain a plurality of pieces of to-be-processed data, and obtain a plurality of groups corresponding to the plurality of pieces of to-be-processed data, wherein the plurality of groups comprise a target group; and
    a watermark adding module, configured to add watermarks to to-be-processed data in the target group by using the target group as a granularity.

12. The apparatus according to claim 11, wherein each piece of to-be-processed data comprises an attribute value of a target attribute; and
    the watermark adding module is specifically configured to add the watermarks to the to-be-processed data in the target group based on attribute values of the target attribute in the to-be-processed data in the target group.

13. The apparatus according to claim 12, wherein attribute values of the target attribute in different to-be-processed data in a same group have semantics of a same type, and semantics of attribute values of the target attribute in to-be-processed data in different groups belongs to different types.

14. The apparatus according to any one of claims 11 to 13, wherein the apparatus further comprises:

    a presentation module, configured to present an interaction interface, wherein the interaction interface comprises a plurality of attribute values of the target attribute in the plurality of pieces of to-be-processed data; and
    the obtaining module is specifically configured to obtain a result of grouping the plurality of pieces of to-be-processed data by a data owner on the interaction interface.

15. The apparatus according to claim 14, wherein the obtaining module is specifically configured to:

    obtain a plurality of attribute value groups based on an operation of grouping the plurality of attribute values by the data owner on the interaction interface, wherein different attribute value groups comprise different attribute values; and
    place, in a same group, to-be-processed data having attribute values in a target attribute value group, wherein the target attribute value group is any one of the plurality of attribute value groups.

16. The apparatus according to claim 14 or 15, wherein the obtaining module is further configured to receive a key and a hash algorithm that are entered by the data owner on the interaction interface, wherein the key and the hash algorithm are used to determine the watermarks added to the to-be-processed data in the target group.

17. The apparatus according to claim 12 or 13, wherein the obtaining module is specifically configured to divide the plurality of pieces of to-be-processed data into a plurality of groups based on attribute values in the plurality of pieces of to-be-processed data.

18. The apparatus according to claim 17, wherein the obtaining module is specifically configured to:

    identify semantics of the attribute values of the target attribute in the plurality of pieces of to-be-processed data; and
    divide the plurality of pieces of to-be-processed data into the plurality of groups based on the semantics of the attribute values of the target attribute in the plurality of pieces of to-be-processed data.

19. The apparatus according to any one of claims 11 to 18, wherein watermark data added to the plurality of pieces of to-be-processed data comprises an error-correcting code.

**20.** The apparatus according to any one of claims 11 to 19, wherein the target group is any one of the plurality of groups.

**21.** A computer-readable storage medium, wherein the computer-readable storage medium stores instructions, and when the instructions run on a computing device, the computing device is enabled to perform the method according to any one of claim 1 to claim 10.

**22.** A computing device, wherein the computing device comprises a processor and a memory, wherein

the memory is configured to store computer instructions; and
the processor is configured to perform the operation steps of the method according to any one of claims 1 to 10 according to the computer instructions.

**23.** A computer program product comprising instructions, wherein when the computer program product runs on a computing device, the computing device is enabled to perform the operation steps of the method according to any one of claims 1 to 10.

FIG. 1

FIG. 2

Group 1 | Group 2

| Fuchsine | Magenta | | Light blue | Azure | Encoding |
| 0000 | 0001 | | 1000 | 1001 | Watermark adding |
| 0000 | 0001 | | 1001 | 1001 | |
| Fuchsine | Magenta | | Azure | Azure | Decoding |

FIG. 3

A computing device 101 obtains a plurality of pieces of to-be-processed data — S401

The computing device 101 obtains a plurality of groups corresponding to the plurality of pieces of to-be-processed data, where the plurality of groups include a target group — S402

The computing device 101 adds watermarks to to-be-processed data in the target group by using the target group as a granularity — S403

FIG. 4

Interaction interface

Please enter watermark data that needs to be added!

Watermark
data:

OK        Cancel

FIG. 5

Interaction interface

Please select an attribute for grouping:

Color  ■

Shape  ☐

Size  ☐

Area  ☐

OK  Cancel

Interaction interface

Attribute values of the color attribute:

Fuchsine

Magenta

Tangerine

Light blue

Azure

Interaction interface

Please group the attribute values of the color attribute:

Group 1

Fuchsine  Magenta

Tangerine

Group 2

Light blue  Azure

OK  Cancel

FIG. 6

Apparatus 700

Obtaining module
701

Watermark adding
module 702

Presentation module
703

FIG. 7

Processor 802

Communications
interface 803

Bus 801

Obtain to-be-processed data
and groups

Add watermarks

Computing
device 101

Memory 804

FIG. 8

**INTERNATIONAL SEARCH REPORT**

International application No.

**PCT/CN2022/091963**

**A. CLASSIFICATION OF SUBJECT MATTER**

G06F 21/60(2013.01)i; G06F 21/16(2013.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 数据, 处理, 分组, 粒度, 控制, 水印, 安全, 属性, 元组, 子组, 纠错, 密钥, data, group, process, granularity, control, watermark, attribute, correct, secret, encryption

**C. DOCUMENTS CONSIDERED TO BE RELEVANT**

| Category* | Citation of document, with indication, where appropriate, of the relevant passages | Relevant to claim No. |
|---|---|---|
| X | 柴合言 (CHAI, Heyan). "面向关系型数据库版权保护的数字水印技术的研究 (Research on Digital Watermarking Technology for Relational Database Ownership Protection)" 中国优秀博硕士学位论文全文数据库(硕士) 信息科技辑 (Chinese Selected Doctoral Dissertations and Master's Theses Full-Text Databases (Master), Information Science and Technology), 15 January 2021 (2021-01-15), pp. 20-36 | 1-23 |
| X | CN 112800394 A (NANJING UNIVERSITY OF POSTS AND TELECOMMUNICATIONS) 14 May 2021 (2021-05-14) description, paragraphs [0038]-[0092] | 1-23 |
| A | CN 112559985 A (SHENZHEN ANKKI TECHNOLOGY CO., LTD.) 26 March 2021 (2021-03-26) entire document | 1-23 |
| A | CN 112906036 A (HEFEI UNIVERSITY OF TECHNOLOGY) 04 June 2021 (2021-06-04) entire document | 1-23 |
| A | CN 110049021 A (CHINA ELECTRIC POWER RESEARCH INSTITUTE CO., LTD.) 23 July 2019 (2019-07-23) entire document | 1-23 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2022** | **10 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2022/091963** |

| Patent document cited in search report | | | Publication date (day/month/year) | Patent family member(s) | Publication date (day/month/year) |
|---|---|---|---|---|---|
| CN | 112800394 | A | 14 May 2021 | None | |
| CN | 112559985 | A | 26 March 2021 | None | |
| CN | 112906036 | A | 04 June 2021 | None | |
| CN | 110049021 | A | 23 July 2019 | None | |

Form PCT/ISA/210 (patent family annex) (January 2015)

**EP 4 357 955 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110780862